## Europäisches Patentamt

## European Patent Office

## Office européen des brevets

(11) Veröffentlichungsnummer: **0 045 295**
**B1**

(12) **EUROPÄISCHE PATENTSCHRIFT**

(45) Veröffentlichungstag der Patentschrift:
**25.01.84**

(21) Anmeldenummer: **81890109.2**

(22) Anmeldetag: **30.06.81**

(51) Int. Cl.³: **B 23 K 35/32**, B 23 K 9/00

(54) **Fülldraht- bzw. Füllbandelektrode für die Hartauftragschweissung.**

(30) Priorität: **25.07.80 AT 3868/80**

(43) Veröffentlichungstag der Anmeldung:
**03.02.82 Patentblatt 82/5**

(45) Bekanntmachung des Hinweises auf die Patenterteilung:
**25.01.84 Patentblatt 84/4**

(84) Benannte Vertragsstaaten:
**BE CH DE LI**

(56) Entgegenhaltungen:
**DE - A - 2 537 112**

(73) Patentinhaber: **VEREINIGTE EDELSTAHLWERKE AKTIENGESELLSCHAFT (VEW), Elisabethstrasse 12, A-1010 Wien (AT)**

(72) Erfinder: **Perteneder, Ernst, Dipl.-Ing., Carl-Morre-Strasse 30, A-8605 Kapfenberg (AT)**
Erfinder: **Gurdet, Franz, Sölsnitz 27, A-8643 Allerheiligen/Mzt. (AT)**

(74) Vertreter: **Widtmann, Georg, Dr., Elisabethstrasse 12, A-1010 Wien (AT)**

## Fülldraht – bzw. Füllbandelektrode für die Hartauftragschweissung

Die Erfindung bezieht sich auf eine Fülldraht- bzw. Füllbandelektrode für die Hartauftragschweissung mit dem elektrischen Lichtbogen, bestehend aus einem Stahlmantel und einer Kernfüllung, deren Gewichtsanteil zumindest 25 Gew.-% des Gesamtgewichtes der Elektrode ausmacht.

Aus der DE-OS 21 51 089 ist ein Schweisszusatzwerkstoff für Lichtbogen-Auftragschweissungen bekannt, der durch einen Gehalt an elementarem, an Legierungsbildnern gebundenen Kohlenstoff gekennzeichnet ist, der über dem stöchiometrischen Wert von $Cr_3C_2$ liegt und im Gitter dieses Chromkarbides ein bzw. angelagert ist.

Zum Auftragen von Schichten mit hohem Verschleisswiderstand ist aus der DE-OS 15 58 907 ein Metallpulver bekannt, das aus 4,1 bis 6% C, 40 bis 50% Cr, 2 bis 4% B, 0,3 bis 2% Mn, 0 bis 8% Ni, max. 0,8% Si, Rest Fe besteht.

Es sind auch Auftragschweisslegierungen auf der Basis von Chromstählen mit Legierungszusätzen von Niob bekannt. So bezieht sich etwa das Auftragschweissmaterial gemäss der britischen Patentschrift 1 488 109 auf eine solche Stahlzusammensetzung mit

0,55 bis  2,0% C
0,2  bis  4,0% Si
0,2  bis  3,0% Mn
4,0  bis  6,5% Cr und
2,5  bis 15,0% Nb.

Ferner ist aus der DE-AS 1 270 377 eine Elektrodenzusammensetzung für das Lichtbogenauftragschweissen bekannt, die auf die niedergelegte Schweisslegierung abgestellt ist und Kohlenstoffgehalte von mehr als 1,62 bis 6,0% vorsieht.

Zu bemerken ist dazu, dass vom Erfinder in dieser Auslegeschrift der vorteilhafte Legierungsbereich für Kohlenstoff mit 4% als Maximalwert angegeben ist und bezüglich der beanspruchten Höchstwerte für Kohlenstoff, Chrom und Niob wird ausdrücklich betont, dass es zwecklos sei, über diese Gehalte hinauszugehen.

Hinsichtlich der Bedeutung des Legeriungselementes Niob ist erwähnt, dass seine Anwesenheit die Bildung von Schrumpfrissen im Schweissauftrag verhindern soll, und zwar selbst dann, wenn die Auftragschweissung auf ein relativ massives Werkstück ohne Vorerhitzung desselben aufgetragen wird. Wird von der Auftragschweissung neben hoher Abriebfestigkeit auch noch eine hohe Schlagfestigkeit verlangt, so wird zur Lösung dieser Aufgabe eine modifizierte Legierung vorgeschlagen, welche 3 bis 5%, vorzugsweise 4% C, mehr als 4 bis 10%, vorzugsweise 5% Cr, 10 bis 25%, vorzugsweise 18% Nb und 35 bis 50%, vorzugsweise 40% W enthält.

Daraus ergibt sich, dass die Fachwelt bisher bei Auftragschweisslegierungen mit einer Chromstahlmatrix und eingebetteten Niob-Karbiden einen Kohlenstoffgehalt von 6% als höchstmöglichen Legierungsgehalt gewertet und Zusammensetzungen vorgezogen hat, die weit unter diesem Höchstwert liegen.

Die vorliegende Erfindung bricht mit diesem Vorurteil und schlägt zur Herstellung von Hart-Auftragschweissungen höchster Verschleissfestigkeit mit dem elektrischen Lichtbogen eine Fülldraht- bzw. Füllbandelektrode vor, die mehr als 6 bis 9 Gew.-% C, 10 bis 30 Gew.-% Cr, 15 bis 30 Gew.-% Nb/Ta und gegebenenfalls zusätzlich bis 5 Gew.-% eines oder mehrerer der Legierungselemente aus der Reihe Si, Mn, Al, Ni, Ti, V, W, Zr, Rest abgesehen von Verunreinigungen Eisen, mit der Massgabe enthält, dass

$$\% C \geqslant \frac{\% Cr}{10} + \frac{\% Nb}{5}$$

ist.

Die chemische Zusammensetzung der erfindungsgemässen Elektrode ist so gewählt, dass bei dem damit niedergelegten Auftragschweissgut die Rissbildung bewusst in Kauf genommen ist. Es wurde nämlich erkannt, dass für die Verschleissbeständigkeit und den praktischen Nutzen der Schweissauftragung nicht die Rissbildung, sondern vielmehr die Verhinderung des Abplatzens nach dem Schweissen der zweiten oder dritten Lage bzw. bei einer Biegebeanspruchung bis zur Nennstreckgrenze des Grundwerkstoffes entscheidend ist. Dies wird durch die praktisch vollständige Abbindung des Karbidbildners Niob durch einen Kohlenstoffüberschuss gemäss der erwähnten Massregel erreicht. Es gelingt dadurch, eine zu starke Versprödung der Matrix zu vermeiden und ein trotz des Vorhandenseins einer Vielzahl von feinen Rissen äusserst verschleissfestes Auftragschweissgut hoher Härte zu schaffen.

Die Zusammensetzung des Schweissgutes ist jeweils mit der Elektrodenzusammensetzung praktisch ident, weil keine Veränderung durch Abbrandverluste eintritt.

Neben hoher Härte und der Verhinderung des Abplatzens des Auftragschweissgutes trotz vorhandener Risse ist selbstverständlich die Abriebbeständigkeit der Schweissgutlegierung von besonderer Bedeutung. Die Neigung eines Werkstoffes zum Abrieb kann z.B. in der Verschleissprüfmaschine von Blake festgestellt werden. Zur Überprüfung der erfindungsgemässen Schweissgutlegierungen wurden Verschleissversuche mit dieser Prüfmaschine durchgeführt, wobei als Vergleichswerkstoff ein gehärteter Stahl × 90 Cr Mo V 18 verwendet wurde. Die chemische Zusammensetzung dieses Vergleichswerkstoffes war die folgende: C = 0,90%; Cr = 17,5%; Mo = 1,15%; V = 0,10%.

Als Verschleissmedium wurde eine Aufschlämmung von gereinigtem Rheinsand, Körnung 0,6–1 mm, in Wasser verwendet, wobei nach jedem Versuchsdurchgang eine komplette Reinigung und Neubeschichtung der Prüfmaschine mit Sand und Wasser erfolgte. Die Flächenpressung betrug 23 N/cm².

Die Neigung zum Abplatzen wurde so geprüft, dass 3-lagige Auftragsschweissungen auf 100 mm dickem Stahlblech mit der maximal zulässigen Stromstärke der Elektrode aufgeschweisst wurden, wobei entweder das Abplatzen nach dem Aufschweissen der 2. oder 3. Lage direkt auftrat oder die Prüfung durch Biegebeanspruchung der Platte bis zur Nennstreckgrenze des verwendeten Grundwerkstoffes vorgenommen wurde.

Die nachstehende Tabelle zeigt einige Beispiele von Elektroden, von denen diejenigen unter der Nr. 3–5 der Erfindungsdefinition entsprechen:

Tabelle:

| | Zusammensetzung der Elektrode | | | | | | | |
|---|---|---|---|---|---|---|---|---|
| Nr. | Typ | C % | Cr % | Nb % | $\frac{\% \, Cr}{10} + \frac{\% Nb}{5}$ | Rockwell-härte HRC | Verschleiss-faktor | Neigung zum Abplatzen |
| 1 | Fülldraht ⌀ 2,4 mm | 4,45 | 22,5 | 15,1 | 5,27 | 61–63 | 1,21 | ja |
| 2 | do. | 6,12 | 29,3 | 21,4 | 7,21 | 65–67 | 0,29 | ja |
| 3 | do. | 6,41 | 21,3 | 18,5 | 5,83 | 65–67 | 0,31 | nein |
| 4 | do. | 7,26 | 14,1 | 25,8 | 6,57 | 66–67 | 0,23 | nein |
| 5 | Füllband 30 × 2 mm | 6,52 | 21,2 | 19,5 | 6,02 | 64–66 | 0,34 | nein |

Werkstoff Nr. 1, der einen Fülldraht von 2,4 mm Durchmesser darstellt, liegt mit seinem C-Gehalt unterhalb der verlangten Mindestgrenze von mehr als 6%. Ausserdem ist die Massregel für den Chrom- und Niobgehalt mit 5,27% nicht erfüllt. Dementsprechend liegt der Verschleissfaktor relativ hoch und es ist die Neigung des Auftragsschweissgutes zum Abplatzen vorhanden.

Die Zusammensetzung 2 stellt ebenfalls einen Fülldraht dar, dessen chemische Zusammensetzung im Rahmen der Erfindungsdefinition liegt, bei dem jedoch der C-Gehalt unterhalb der zwingend verlangten Relationsbeziehung liegt. Im Schweissgut wurde wohl ein niedriger Verschleissfaktor festgestellt, jedoch war ebenfalls die Neigung zum Abplatzen der Auftragsschweissung vorhanden.

Die Elektrodenzusammensetzungen 3–5 entsprechen voll der Erfindungsdefinition; ihr Schweissgut zeigt einen niedrigen Verschleissfaktor und es ist auch keine Neigung zum Abplatzen der Auftragsschweissung vorhanden.

Die Zusammensetzung 5 stellt dabei ein Füllband mit den Aussenabmessungen 30 × 2 mm dar, mit dessen Hilfe Auftragsschweissungen besonders wirtschaftlich durchgeführt werden können.

Als Stahlmantel für die in der Tabelle angeführten Fülldrähte sowie für das Füllband wurde ein Chromstahlband mit 11,5% Cr verwendet.

Der Darstellung des Aussehens des mit den erfindungsgemässen Elektroden erhaltenen Schweissgutes dient ein Bild, welches die photographische Abbildung der mit dem Fülldraht Nr. 4 der Tabelle erhaltenen Auftragsschweissung im Massstab 1:1 zeigt. Man erkennt deutlich die ausgeprägte Rissbildung, welche jedoch die hervorragenden technologischen Eigenschaften des Schweissgutes nicht beeinträchtigt. (Die Schweissparameter waren: 350 A, 28 V; Pendelbreite etwa 25 mm).

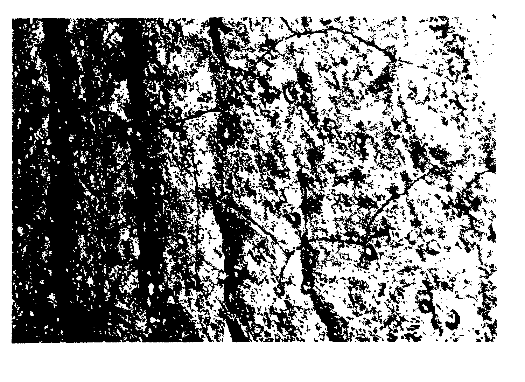

**Patentansprüche**

1. Fülldraht- bzw. Füllbandelektrode für die Hartauftragsschweissung mit dem elektrischen Lichtbogen, bestehend aus einem Stahlmantel und einer Kernfüllung, deren Gewichtsanteil zumindest 25 Gew.-% des Gesamtgewichtes der Elektrode ausmacht, dadurch gekennzeichnet, dass die Elektrode mehr als 6 bis 9 Gew.-% C, 10 bis 30 Gew.-% Cr, 15 bis 30 Gew.-% Nb/Ta und gegebenenfalls zusätzlich bis 5 Gew.-% eines oder mehrerer der Legierungselemente aus der Reihe Si, Mn, Al, Ni, Ti, V, W, Zr, Rest abgesehen von Verunreinigungen Eisen, mit der Massgabe enthält, dass

$$\% \, C \geqslant \frac{\% \, Cr}{10} + \frac{\% \, Nb}{5}$$

ist.

2. Fülldraht bzw. Füllbandelektrode nach Anspruch 1, dadurch gekennzeichnet, dass der Stahlmantel aus einem Chromstahl mit 10 bis 30 Gew.-% Cr gebildet ist.

**Revendications**

1. Fil fourré et feuillard fourré, respectivement, pour rechargements durs à arc électrique, composé d'une enveloppe en acier et d'une fourrure pesant au moins 25% en poids du poids total de l'électrode caractérisé en ce que l'électrode comporte plus de 6 à 9% en poids de carbone, 10 à 30% en poids de chrome, 15 à 30% en poids de Nb/Ta et éventuellement jusqu'à 5% en poids d'un ou de plusieurs des éléments d'alliage de la série Si, Mn, Al, Ni, Ti, V, W, Zr, le reste étant du fer, à part des impuretés, avec la condition supplémentaire que

$$\% \, C \geqslant \frac{\% \, Cr}{10} + \frac{\% \, Nb}{5}$$

2. Fil fourré et feuillard fourré, respectivement, selon la revendication 1, caractérisé en ce que l'enveloppe est constitué d'un acier à 10 à 30% en poids de chrome.

**Claims**

1. Filler wire or filler band electrode for hard surfacing by the electric arc welding the wire or band consisting of a steel envelope and a filler weighing at least 25 percent by weight of the total wire or strip weight, characterized in that the electrode contains at least 6 to 9 percent by weight of carbon, 10 to 30 percent by weight of chromium, 15 to 30 percent by weight of Nb/Ta and, as the case may be, 5 percent by weight of one or more of the alloying elements of the series Si, Mn, Al, Ni, Ti, V, W, Zr, the remainder being composed of iron and impurities, with the proviso

$$\% \, C \geqslant \frac{\% \, Cr}{10} + \frac{\% \, Nb}{5}$$

2. Filler wire or filler band electrode as claimed in claim 1, characterized in that the envelope is made from chromium steel containing from 10 to 30 percent by weight of chromium.

1/1